**Europäisches Patentamt**

**European Patent Office**

**Office européen des brevets**

(11) Publication number: **0 101 051**
**B1**

(12) **EUROPEAN PATENT SPECIFICATION**

(45) Date of publication of patent specification: **08.11.89**

(21) Application number: **83107856.3**

(22) Date of filing: **09.08.83**

(51) Int. Cl.⁴: **G 05 D 3/14, G 05 D 13/62**

(54) Method of position control by DC servomotor.

(30) Priority: **17.08.82 JP 143124/82**

(43) Date of publication of application:
**22.02.84 Bulletin 84/08**

(45) Publication of the grant of the patent:
**08.11.89 Bulletin 89/45**

(84) Designated Contracting States:
**CH DE FR GB LI SE**

(56) References cited:
**DE-B-2 916 615**
**GB-A-1 605 103**
**GB-A-1 605 104**

**Patent Abstracts of Japan vol. 4, no. 121, 27 August 1980 page 22E23 & JP-A-55-74395**

(73) Proprietor: **SUMITOMO ELECTRIC INDUSTRIES LIMITED**
**No. 15, Kitahama 5-chome Higashi-ku**
**Osaka-shi Osaka 541 (JP)**

(72) Inventor: **Takemoto, Akira Sumitomo Electric Industries, Ltd.**
**Osaka Works 1-3, Shimaya 1-chome Konohana-ku Osaka (JP)**

(74) Representative: **Kuhnen, Wacker & Partner Schneggstrasse 3-5 Postfach 1553 D-8050 Freising (DE)**

Courier Press, Leamington Spa, England.

## Description

The invention is concerned with a method of position control by servomechanics with a high degree of accuracy, according to the precharacterizing portion of the appended claim. DC servomotors are widely used in the field of automated equipment such as industrial robots, numerically controlled fabrication machines, and intelligent printers or plotters. In these applications, loads operated by the motor (for instance, the hand architecture of robots cutting or drilling tools, printer heads of office terminals, and rollers of press machines) should be held at a predetermined position after movement from the preceding position within a short period of time. It becomes necessary to control the amount of electric current supplied to the servomotor by detecting the position of the load continuously along with its moving velocity. For this purpose, a servomotor with a high degree of responsiveness to commands and with capability to move promptly and to stop precisely is necessary. In normal practice, current to the rotor is controlled for this purpose. The present invention provides a method of control utilizing a small-sized motor achieving high degrees of stiffness.

Brief description of the drawings relating to the prior art
Figure 1 is a schematic view of a servomotor (M) linked to a load (L);
Figure 2 is a block diagram of a commonly used control system with a servo-drive circuit (B);
Figure 3 shows a block diagram of a servo-drive circuit in conventional control system;
Figure 4 illustrates an example of target angle $\theta_c$ given as a step signal; and
Figure 5 shows a step-signal response of the conventional positioning system, that is, shift of rotational angle $\theta$ vs. time $(\Omega.t)$ controlled according to equation 5.

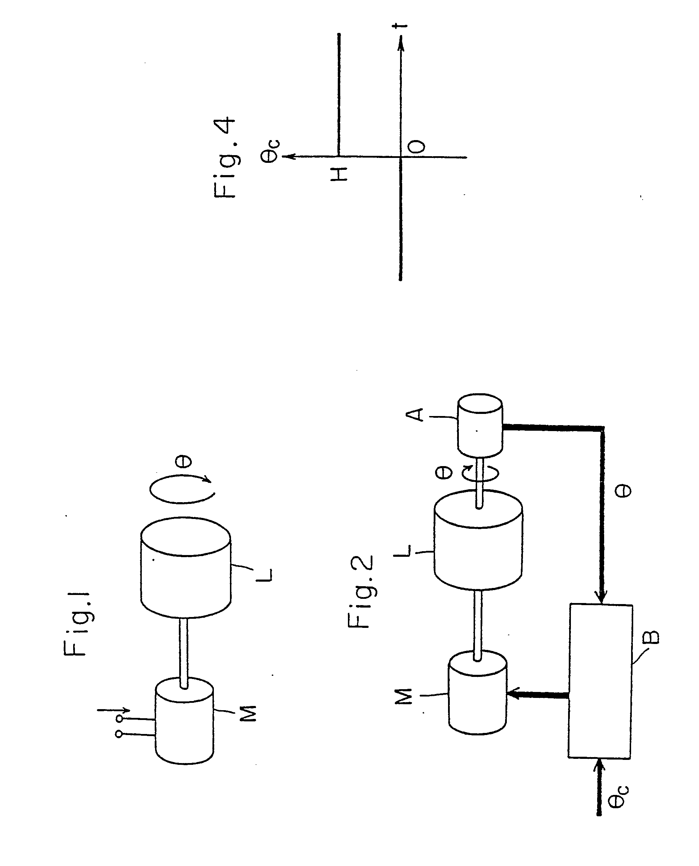

Description of the prior art
In Figure 1, a DC servomotor (M) is linked to a load (L). The motive force of rotation is produced by supplying electric current to a rotor located in a magnetic field. The torque of the motor is proportional to the current $(i_R)$ of the rotor and, therefore, expressed as in equation 1:

$$t_L = K_T \cdot i_R \tag{1}$$

where $K_T$ is the ratio of torque to rotor current and is constant for a given motor.

When the moments of inertia of the load around the rotation axis is $J_L$ and that of the motor is $J_M$, the relation between the angle $(\theta)$ of the load around the rotation axis and time $(t)$ is expressed in the following equation of motion:

$$\frac{d^2\theta}{dt^2} = \frac{t_L}{J_M + J_L} = \frac{K_T}{J} \cdot i_R \tag{2}$$

where

$$J = J_M + J_L \tag{3}$$

From equation 2 it is understood that the rotation angle $(\theta)$ can be controlled by varying the current $(i_R)$ in the rotor of the DC servomotor (M). In the practical application of the motor with $i_R$ control, there are many methods for determining the value of $i_R$ necessary for rotating the load to the target angle $(\theta_c)$.

In Figure 2, a commonly used method of control is illustrated. There, a load (L) is connected to an angle detector (A), which determines the position of the load on a three-dimensional coordinate axis of x, y, and z. A servo-drive circuit (B) determines the rotor current $(i_R)$ by comparing the value of $\theta$ observed by the angle detector with the target angle $(\theta_c)$.

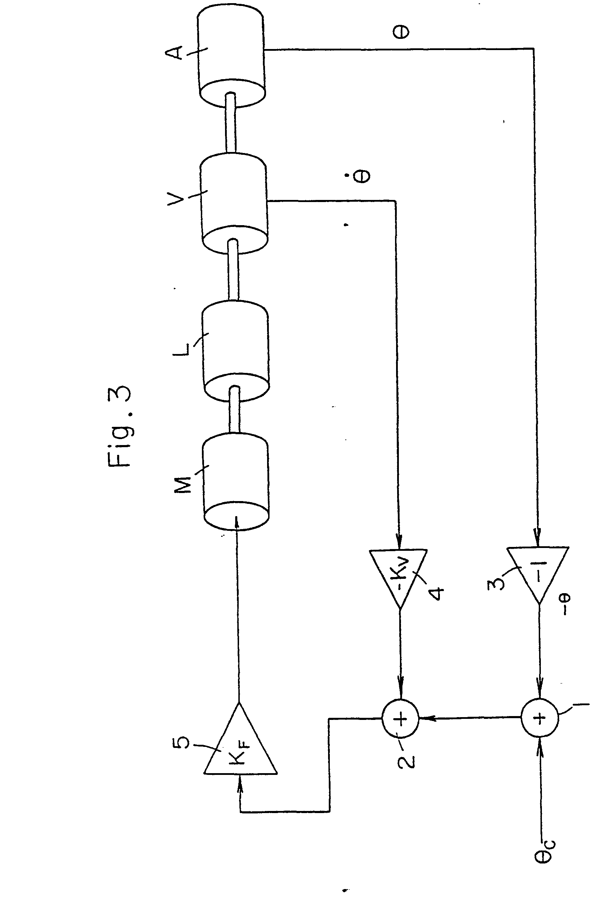

Figure 3 is a block diagram of a servo-drive circuit. As illustrated in the figure, adders (1 and 2), proportional amplifiers (3, 4, and 5), and mechanical links are used. Proportional amplifier 3 is utilized to convert signal $\theta$ to $-\theta$, and adder 1 adds $-\theta$ to $\theta_c$. Proportional amplifier 4 multiplies $(d\theta/dt)$, obtained from a velocity detector (V), by the velocity coefficient $(-K_V)$, and adder 2 adds $(\theta_c-\theta)$ to the resistance to motion, that is, the product of $-K_V$ and $(d\theta/dt)$. Proportional amplifier 5 determines the product of the feedback coefficient $(K_F)$ and $[(\theta_c-\theta)-K_V \cdot (d\theta/dt)]$ and thus $i_R$ is given in equation 4:

$$i_R = K_F(\theta_c - \theta - K_V \cdot \frac{d\theta}{dt}) \tag{4}$$

Equation of motion 5 is derived from equations 1, 2, and 4:

$$\frac{d^2\theta}{dT^2} + 2D \cdot \frac{d\theta}{dT} + \theta = \theta_c \tag{5}$$

where:

2

$$\Omega_0 = \sqrt{\frac{K_T \cdot K_F}{J}} \qquad (6)$$

$$D = \frac{K_V}{2} \sqrt{\frac{K_T \cdot K_F}{J}} \qquad (7)$$

$$T = \Omega_0 \cdot t \qquad (8)$$

where $\Omega_0$ is a time coefficient.

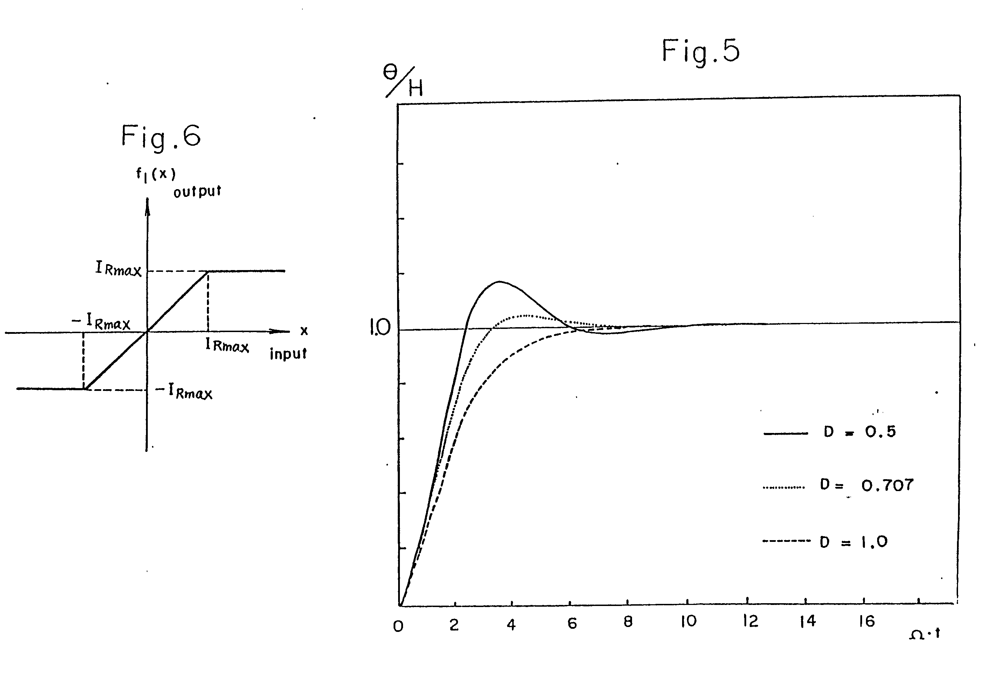

Figure 4 illustrates an example where the target angle or commanded angle $\theta_c$ is given as a step signal, where H is height of the step signal and the signal is given when T=0.

Figure 5 shows a step-signal response, that is, shift of $\theta$ vs. time (T) according to equation 5. In the figure, D represents the damping coefficient (the second internal term of equation 4), and three typical values, 1.0, 0.707, and 0.5, are shown. When D is small, the load passes far beyond the commanded angle ($\theta_c$) and merges to the value ultimately after several fluctuations.

When D is large, $\theta$ does not exceed $\theta_c$. However, it is not likely that $\theta$ approaches $\theta_c$ in a short period of time. The most optimum approach of $\theta$ to the commanded value ($\theta_c$) will be achieved when D=1.0. When D=0.707, it allows a small amount of passage of $\theta$ beyond $\theta_c$. The value of D can be selected as described depending on the conditions of approach of $\theta$ to the desired commanded value ($\theta_c$). Thus, velocity coefficient ($K_V$) and feedback coefficient ($K_F$) can be determined in order to give the D value which is most preferable under the circumstances given.

In equation 7, $K_T$ and J are determined when a motor and load are specified. However, the values of $K_V$ and $K_F$ cannot be determined even when $K_T$, J, and D are specified. Thus, another factor becomes necessary to determine the values of $K_V$ and $K_F$. A concept of "stiffness" of the servomechanical control has been introduced. Stiffness (S) is defined in equation 9:

$$S = \frac{t_s}{\Delta\theta} \qquad (9)$$

where $t_s$ is the force necessary to hold the load at a constant position of $\Delta\theta$ from $\theta_c$ when the load is subjected to a constant external force. It is obvious that the higher the degree of stiffness, the closer the load can be held to the commanded position. From equations 1 and 4, S can be expressed as in equation 10:

$$S = K_F \cdot K_T \qquad (10)$$

To obtain a high degree of stiffness, feedback coefficient ($K_F$) of the system must be large. However, an increase of $K_F$ causes an increase of the rotor current of the motor and tends to exceed the motor's rated current. Thus, the feedback coefficient ($K_F$) and, consequently, the stiffness (S) of the system are limited by the maximum allowable electric current of the motor. Although it had been tried to use a limiter to avoid exceeding the rated current of the motor, it had been found that doing so reduced the current for braking, and that the load thus moved beyond the commanded angle and took longer to converge. Generally, DC servomotors for driving robot links are required to be compact and light in weight and responsive to requirements. Moreover, a high degree of stiffness, that is, capability to hold the load firmly at the determined position, is also a requisite of servomotors in a control system. The above requirements must be met when selecting the optimum servomotor for a control system.

Summary of the invention

Accordingly, it is the purpose of the present invention to make it possible to use a compact, lightweight servomotor, that is, one with a small rating current, by enabling use of a limiter and thus enabling use of a feedback coefficient sufficiently large to maintain positioning accuracy and short response time. This is achieved by regulating the rotor current as set forth in characterizing portion of the appended claim.

In the following preferred embodiments of the invention are described in more details with respect to the accompanying drawings where

Figure 6 shows the input/output characteristics of the limiter current of the servomotor of the present invention;

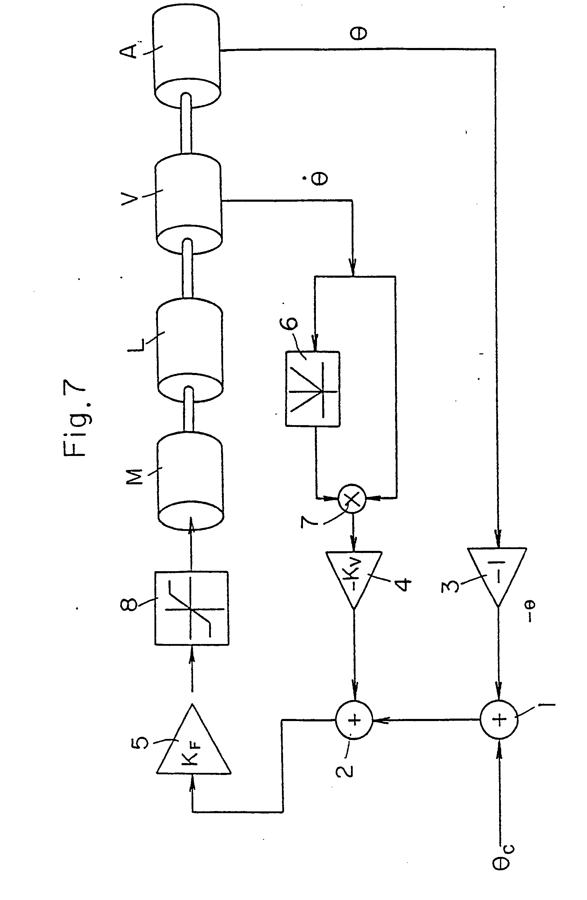

Figure 7 shows a schematic view of a servomotor-controlled positioning system of the present invention, utilizing a velocity detector;

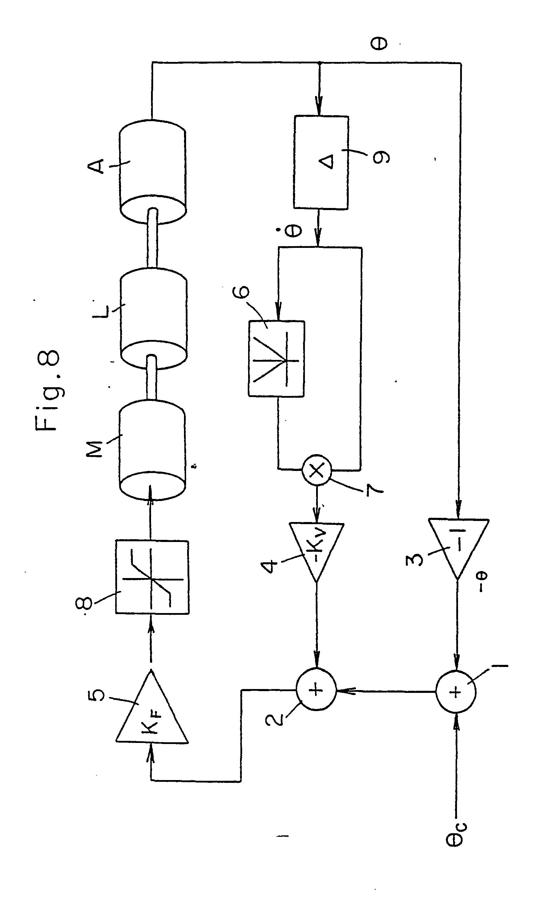

Figure 8 is a schematic view of another embodiment of the present invention, utilizing a differentiator; and

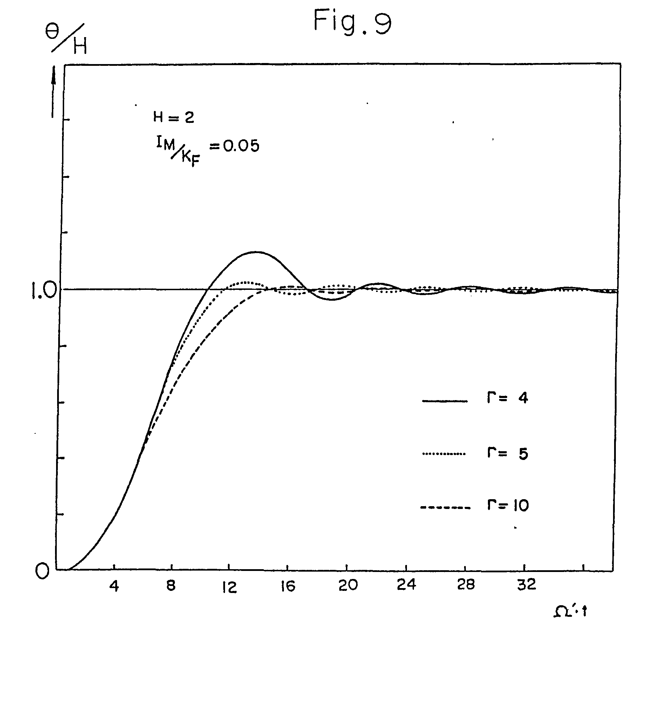

Figure 9 illustrates the step-response of the servomotor-controlled positioning system of the present invention, that is, shift of $\theta$ vs. time ($\Omega' \cdot t$).

3

Description of the preferred embodiments

A method of position control by DC servomotor with a high degree of stiffness is disclosed. In the present invention, a limiter circuit is incorporated in order to regulate the maximum allowable rotor current of the motor. To achieve a high degree of stiffness, the feedback coefficient ($K_F$) is maintained as large as practicable and the electric current supplied to the rotor ($i_R$) is controlled within $\pm I_{Rmax}$ (where $I_{Rmax}$ is maximum allowable rotor current). Figure 6 shows the relation between input current (x) and output current, $f_1(x)$, of the limiter. The input (x) is given according to equation 4, and the corresponding output current is $f_1(x)$. The limiter function, $f_1(x)$, is defined as in equation 11:

$$f_1(x) = \begin{cases} I_{Rmax} & \text{where } I_{Rmax} \leqq x \\ x & \text{where } -I_{Rmax} < x < I_{Rmax} \\ -I_{Rmax} & \text{where } x \leqq -I_{Rmax} \end{cases} \quad (11)$$

The input current (x) is a variable and is expressed in equation 12:

$$x = K_F[(\theta_c - \theta) - (\text{damping term})] \quad (12)$$

The damping term concept in equation 12 is derived from equation 4; that is:

$$i_R = K_F[(\theta_c - \theta) - K_V \cdot \frac{d\theta}{dt}]$$

$$= K_F(\theta_c - \theta) - K_F \cdot K_V \cdot \frac{d\theta}{dt} \quad (4)$$

The present invention is characterized by inclusion of a limiter circuit and by use of a different damping term. That is, instead of using the differential of the first order of the load angle ($\theta$), the square of the differential is used.

In the present invention, the damping term is proportional to the square of the differential of $\theta$, and is represented with a negative coefficient ($-K_V$) in equation 14:

$$\text{damping term} = -K_V \cdot \frac{d\theta}{dt} \cdot \left| \frac{d\theta}{dt} \right| \quad (14)$$

Therefore, rotor current ($i_R$) is expressed as in equation 15:

$$i_R = f_1[K_F(\theta_c - \theta) - K_V \cdot \frac{d\theta}{dt} \cdot \left| \frac{d\theta}{dt} \right|] \quad (15)$$

When $i_R$ in the above equation is placed into equations 1 and 2, equation of motion 16 is obtained:

$$\frac{d^2\theta}{dT'^2} = f_2[\theta_c - \theta - 2\Gamma \cdot \frac{d\theta}{dT'} \cdot \left| \frac{d\theta}{dT'} \right|] \quad (16)$$

where

$$\Omega' = \sqrt{\frac{K_T \cdot K_F}{J}} \quad (6')$$

$$T' = \Omega' \cdot t \quad (8')$$

Then, the normalized form of the limiter function, $f_2(x)$, is given as in equation 11':

$$f_2(x) = \begin{cases} I_{Rmax}/K_F & \text{where } I_{Rmax}/K_F \leqq x \\ x & \text{where } |x| \ I_{Rmax}/K_F \\ -I_{Rmax}/K_F & \text{where } x \leqq -I_{Rmax}/K_F \end{cases} \quad (11')$$

where    is defined as:

$$\Gamma = \frac{K_F \cdot K_T \cdot K_V}{2J} \quad (17)$$

4

The position-setting servo-control system of the present invention is explained in detail in the figures. The preferred embodiments of the present invention are composed of a servo-drive mechanism for determining the motor (rotor) current satisfying equation of motion 16. Figure 7 is a schematic of the servo-control system of the present invention where the motor (M) is linked to a load (L), and an angle detector (A) and velocity detector (V) are connected to the load (L). The angle detector (A) is selected from such devices as an encoder, resolver, or potentiometer. The velocity detector (V), such as a tachometer generator, measures ($d\theta/dt$), which is then converted to its absolute value by an absolute-value determiner (6). A multiplier (7) calculates

$$\frac{d\theta}{dt} \cdot \left| \frac{d\theta}{dt} \right|,$$

followed by multiplication by $-K_V$ by a proportional amplifier (4). Another proportional amplifier (3) and adder (1) calculate ($\theta_c - \theta$), then another adder (2) uses the values obtained through components 4 and 1 to calculate equation 18:

$$\theta_c - \theta - K_V \cdot \frac{d\theta}{dt} \cdot \left| \frac{d\theta}{dt} \right| \qquad (18)$$

Another proportion amplifier (5) calculates the product of equation 18 and the feedback coefficient ($K_F$). A limiter (8) regulates the current supplied to the rotor of the motor (M).

Figure 8 is another embodiment of the servo-control system of the present invention. The difference between this and the previously described embodiment is that in this case there is no velocity detector (V). The value of ($d\theta/dt$) is obtained by a differentiator (9) from the angle signals ($\theta$) of the load observed by the angle detector (A).

As described above, the main characteristics of the servo-control system utilizing the method of the present invention are incorporation of a brake term proportional to the square of the differential of the angle ($\theta$) of the load, thus making it possible to use a limiter to keep the current supplied to the rotor within $\pm I_{Rmax}$.

By these characteristics, the position control system based on the method of the present invention achieves prompt response to the command and smooth approach to the destination and, moreover, provides high degree of stiffness at the convergence of the motion even when a small, compact servomotor is used.

Figure 9 illustrates some of the solutions of equation 16. In the figure, the step-signal (H) is equal to two radians and other conditions are described below:

$$I_{Rmax}/K_F = 0.05$$

$$\Gamma = 4, 5, \text{ and } 10$$

In Figure 9 horizontal coordinate axis is $\Omega' \cdot t$, and the vertical coordinate axis is the normalized rotation angle of the load (L), which is expressed as $\theta/H$. It is observed that:

(a) When $\Gamma = 4$, brake action seems less effective and deviates in the positive direction or in the negative direction, passing several times across the vicinity of the commanded angle ($\theta_c$).

(b) When $\Gamma = 5$, fluctuation (overshoot) range of $\theta$ is small and converges to the commanded position gradually.

(c) When $\Gamma = 10$, convergence is prompt with a smaller range of fluctuation during the period of motion. Thus, an early and smooth convergence of the load is achieved due to the increased value of the brake coefficient ($\Gamma$). To obtain short response time, it is necessary to have a large time coefficient ($\Omega'$), and to obtain a large $\Omega'$, it is necessary to have a large feedback coefficient ($K_F$) according to equation 6'. After $K_F$ has been thus selected, the velocity coefficient ($K_V$) is selected according to equation 17 in order to obtain the desired damping coefficient ($\Gamma$).

Merits of the present invention are:

According to the present invention, stiffness (S) can be increased by increasing the feedback coefficient ($K_F$) even if a servomotor is provided with fixed limiter current determined according to the rated current of the rotor. As explained in the preceding part of the specification, a larger $K_F$ can be used than usual, so higher stiffness can be obtained without difficulty.

According to the present invention, a small-sized lower power/current ratio DC servomotor is capable of providing high degree of stiffness, thus making it possible to locate the load at a predetermined position with great accuracy.

A method of position control by DC servomotor with improved stiffness is disclosed. In the present invention, electric current ($i_R$) of the servomotor is interpreted anew and given as follows:

5

# EP 0 101 051 B1

$$i_R = f\{K_F(\theta_c - \theta - K_V \cdot \frac{d\theta}{dt} \cdot |\frac{d\theta}{dt}|)\}$$

where $\theta$ is an observed rotation angle of the load (L), $\theta_c$ is a precommanded value, $K_F$ is a feedback coefficient, and $K_V$ is a velocity coefficient. After normalizing the above equation, it was discovered that stiffness (S) can be increased by incorporating a limiter into the control system, thus providing prompt response and smooth convergence of $\theta$ to $\theta_c$ with a high degree of stiffness maintained at the precommanded angle ($\theta_c$).

**Claim**

Method of position control by means of a DC servo motor (M) as driving element for linkage(s) tool(s), or other working load (L) which are connected to the motor (M) directly or through (a) suitable speed-changing mechanism(s) wherein the angle ($\theta$) of the load (L) is detected, the velocity ($\dot{\theta}$) of said load (L) is detected, the rotor current ($i_R$) of the motor (M) is controlled by comparing an observed rotation angle value $\theta$ of the load (L) with a commanded rotation angle value $\theta_c$ and the difference between said angle values is determined as $\Delta\theta = \theta_c - \theta$ by means of a proportional amplifier (3) and adder (1), characterized by the following steps:

determining a velocity value $\dot{\theta}$ of the load by means of a velocity detector (V) or a differentiator (9), the latter generatng the differential of the load angle;

determining the absolute value $|\dot{\theta}|$ of the velocity by means of an absolute-value determiner (6);

determining a first product of the velocity value $\dot{\theta}$ and the absolute value $|\dot{\theta}|$ thereof by means of a multiplier (7);

determining from said first product and a velocity coefficient $K_V$ a second product $K_V \dot{\theta}|\dot{\theta}|$ by means of a proportional amplifier (4);

determining a value $\theta_c - \theta - K_V \dot{\theta}|\dot{\theta}|$ by means of an adder (2);

determining from said latter value and a feedback coefficient $K_F$ a third product by means of a proportional amplifier (5);

supplying in response to said third product to the rotor of the motor (M) an electric current $i_R$ having a value

$$i_R = f\{K_F(\theta_c - \theta - K_V \dot{\theta}|\dot{\theta}|)\} = f(x)$$

where

$$f(x) = \begin{cases} I_{Rmax} & \text{where } I_{Rmax} \leqq x \\ x & \text{where } -I_{Rmax} < x < I_{Rmax} \\ -I_{Rmax} & \text{where } x \leqq -I_{Rmax} \end{cases}$$

said rotor current $i_R$ thus being limited in a limiter (8) to a maximum absolute value of $I_{Rmax}$, and where the coefficients $K_F$ and $K_V$ are set for obtaining a high degree of stiffness and a desired damping effect resulting from said first product $\dot{\theta}|\dot{\theta}|$.

**Patentanspruch**

Methode zur Positionssteuerung durch einen Gleichstromservomotor als Antriebselement für mechanische Verbindung(en), Werkzeug(e) oder andere Arbeitslast (L), welche direkt mit dem Motor (M) verbunden sind oder durch (A) (einen) geeignete(n) Geschwindigkeitsveränderungsmechanismen(-mus), worin der Winkel ($\theta$) der Last (L) festgestellt wird, die Geschwindigkeit ($\dot{\theta}$) der Last (L) festgestellt wird, der Rotorstrom ($i_R$) des Motors (M) gesteuert wird durch Vergleich eines beobachteten Rotionswinkelwerts $\theta$ der Last (L) mit einem geforderten Rotationswinkelwert ($\theta_c$) und die Differenz zwischen den Winkelwerten bestimmt wird als $\Delta\theta = \theta_c - \theta$ mittels eines Proportionalverstärkers (3) und eines Addierers (1), gekennzeichnet durch folgende Schritte:

Bestimmen eines Geschwindigkeitswerts $\dot{\theta}$ der Last mittels eines Geschwindigkeitsdetektors (V) oder eines Differenziergliedes (9), wobei das letztere das Differential des Lastwinkels erzeugt;

Bestimmen des Absolutwerts $|\dot{\theta}|$ der Geschwindigkeit durch eine Absolutwertbestimmungseinrichtung (6);

Bestimmen eines ersten Produkts des Geschwindigkeitswerts $\dot{\theta}$ und des Absolutwerts $|\dot{\theta}|$ davon mittels eines Multiplizierers (7);

Bestimmen eines zweiten Produktes $K_V\dot{\theta}|\dot{\theta}|$ aus dem ersten Produkt und einem Geschwindigkeitskoeffizienten $K_V$ mittels eines Proportionalverstärkers (4);

Bestimmen eines Wertes $\theta_c - \theta - K_V\dot{\theta}|\dot{\theta}|$ durch die Einrichtung eines Addierers (2);

Bestimmen eines dritten Produktes aus dem letzteren Wert und einem Rückkopplungskoeffizienten $K_F$ mittels eines Proportionalverstärkers (5);

6

Versorgen des Rotors des Motors (M) als Antwort auf das dritte Produkt mit einem elektrischen Strom $i_R$, welcher einen Wert

$$i_R = f\{K_F(\theta_c - \theta - K_V \; \dot{\theta}|\dot{\theta}|)\} = f(x)$$

besitzt, wobei

$$f(x) = \begin{cases} I_{Rmax} & \text{wobei } I_{Rmax} \leqq x \\ x & \text{wobei } -I_{Rmax} < x < I_{Rmax} \\ -I_{Rmax} & \text{wobei } x \leqq -I_{Rmax} \end{cases}$$

der Rotorstrom $i_R$ in einem Begrenzer (8) auf einen maximalen Absolutwert von $I_{Rmax}$ dementsprechend begrenzt wird, und wobei die Koeffizienten $K_F$ und $K_V$ gesetzt sind zum Erlangen eines hohen Grades von Stiefheit und eines erwünschten Dämpfungseffektes resultierend von dem ersten Produkt $\dot{\theta}|\dot{\theta}|$.

**Revendication**

Procédé de commande de position au moyen d'un servomoteur à courant continu (M) comme élément d'entrainement pour une ou des tringleries, un ou des outils, ou autre charge de travail (L) qui sont reliés à un moteur, directement ou par l'intermédiaire d'un ou de plusieurs mécanismes convenables de changement de vitesse, procédé dans lequel l'angle ($\theta$) de la charge (L) est détecté, la vitesse ($\dot{\theta}$) de ladite charge (L) est détectée, le courant ($i_R$) passant dans le rotor du moteur (M) est commandé par comparaison de la valeur observée $\theta$ de l'angle de rotation de la charge (L) avec une valeur commandée $\theta_c$ de cet angle de rotation et dans lequel la différence entre lesdites valeurs de cet angle est déterminée sous la forme $\Delta\theta = \theta_c - \theta$ au moyen d'un amplificateur proportionnel (3) et d'un additionneur (1), caractérisé par les étapes suivantes:

déterminer une valeur de la vitesse $\dot{\theta}$ de la charge au moyen d'un détecteur de vitesse (V) ou d'un différentiator (9), ce dernier générant la différentielle de l'angle de la charge;

déterminer la valeur absolue $|\dot{\theta}|$ de la vitesse au moyen d'un dispositif de détermination (6) de la valeur absolue;

déterminer un premier produit de la valeur de la vitesse $\dot{\theta}$ et de sa valeur absolue $|\dot{\theta}|$ au moyen d'un multiplicateur (7);

déterminer, à partir dudit premier produit et d'un coefficient de vitesse $K_V$, un second produit $K_V \; \dot{\theta}|\dot{\theta}|$ au moyen d'un amplificateur proportionnel (4);

déterminer une valeur $\theta_c - \theta - K_V \; \dot{\theta}|\dot{\theta}|$ au moyen d'un additionneur (2);

déterminer, à partir de ladite dernière valeur et d'un coefficient de rétroaction $K_F$, un troisième produit au moyen d'un amplificateur proportionnel (5);

fournir, en réponse audit troisième produit, au rotor du moteur (M), un courant électrique $i_R$ ayant la valeur

$$i_R = f\{K_F(\theta_c - \theta - K_V \; \dot{\theta}|\dot{\theta}|)\} = f(x)$$

où

$$f(x) = \begin{cases} I_{Rmax} & \text{si } I_{Rmax} \leqq x \\ x & \text{si } -I_{Rmax} < x < I_{Rmax} \\ -I_{Rmax} & \text{si } x \leqq -I_{Rmax} \end{cases}$$

ledit courant $i_R$ passant dans le rotor étant ainsi limité, dans un limiteur (8), à une valeur absolue maximale de $I_{Rmax}$, les coefficients $K_F$ et $K_V$ étant définis pour obtenir un haut degré de rigidité et un effet d'amortissement désiré résultant dudit premier produit $\dot{\theta}|\dot{\theta}|$.

Fig.1

M

L

θ

Fig.2

M

L

A

θ

θc

B

θ

Fig.4

θc

H

O

t

Fig.3

EP 0 101 051 B1

# Fig.5

Fig.6

EP 0 101 051 B1

Fig.7

# Fig.8

EP 0 101 051 B1

# Fig.9

$\theta/H$

H = 2

$I_M/K_F = 0.05$

1.0

$\Gamma = 4$

$\Gamma = 5$

$\Gamma = 10$

O

4  8  12  16  20  24  28  32

$\Omega' t$